# EUROPEAN PATENT APPLICATION

(11) **EP 3 521 244 A1**
(43) Date of publication of application: **07.08.2019**
(21) Application number: 17858073.4
(22) Date of filing: 14.08.2017
(51) Int. Cl.: C01B 32/158, B82Y 30/00

(54) **CARBON NANOTUBE AGGREGATE**

(30) Priority: 03.10.2016 JP 2016195768; 31.03.2017 JP 2017069815
(71) Applicant: Nitto Denko Corporation, Ibaraki-shi, Osaka 567-8680 (JP)
(72) Inventor: HATAKEYAMA Yoshiharu, Ibaraki-shi Osaka 567-8680 (JP); ICHIKAWA Tomoaki, Ibaraki-shi Osaka 567-8680 (JP); MASUDA Shotaro, Ibaraki-shi Osaka 567-8680 (JP); MAENO Yohei, Ibaraki-shi Osaka 567-8680 (JP)
(74) Representative: Müller-Boré & Partner Patentanwälte PartG mbB
(86) International application number: PCT/JP2017/029245
(87) International publication number: WO 2018/066233

(57) **Abstract**

Provided is a carbon nanotube aggregate excellent in gripping force. The carbon nanotube aggregate of the present invention is a carbon nanotube aggregate of a sheet shape, including a plurality of carbon nanotubes, wherein the carbon nanotube aggregate has a cohesive strength N of 3 nJ or more on a front surface and/or a back surface thereof, which is measured by a nanoindentation method with an indentation load of 500 µN.

## Description

### Technical Field

The present invention relates to a carbon nanotube aggregate.

### Background Art

In transporting an object to be processed, such as a material, a production intermediate, or a product, in a manufacturing process for a semiconductor device or the like, the object to be processed is transported through use of a carrying member, such as a movable arm or a movable table (see, for example, Patent Literatures 1 and 2). In such transportation, there is a demand for a member on which the object to be processed is to be mounted (fixing jig for transportation) to have such a strong gripping force as to prevent the object to be processed from shifting in position while being transported. In addition, such demand has increased year by year along with a demand for a faster manufacturing process.

However, ina related-art fixing jig for transportation, there is a problem in that the object to be processed is held by an elastic material, such as a resin, and hence the elastic material is liable to adhere to and remain on the object to be processed. In addition, there is a problem in that the elastic material, such as a resin, has low heat resistance, and hence the gripping force of the jig is reduced under a high-temperature environment.

When a material such as ceramics is used for the fixing jig for transportation, contamination of the object to be processed is prevented, and temperature dependence of a gripping force is reduced. However, a fixing jig for transportation formed of such material involves a problem of inherently having a weak gripping force, and thus being unable to sufficiently hold the object to be processed even at normal temperature.

In addition, a method of holding the object to be processed under a high-temperature environment is, for example, a method involving adsorbing the object to be processed under reduced pressure, or a method involving fixing the object to be processed by the shape of a fixing jig for transportation (e.g., chucking or counterbore fixing). However, the method involving adsorbing the object to be processed under reduced pressure is effective only under an air atmosphere, and cannot be adopted under a vacuum in, for example, a CVD step. In addition, the method involving fixing the object to be processed by the shape of the fixing jig for transportation involves, for example, the following problems. The object to be processed is damaged, or a particle is produced, by contact between the object to be processed and the fixing jig for transportation.

A possible method of solving such problems as described above is the use of a pressure-sensitive adhesive structure including a carbon nanotube aggregate as a fixing jig for transportation. The carbon nanotube aggregate can hold the object to be processed with a van der Waals force. Meanwhile, the aggregate involves a problem in that its gripping force is not sufficient in, for example, the case where high-speed transportation is required.

### Citation List

### Patent Literature

[PTL 1] JP 2001-351961 A
[PTL 2] JP 2013-138152 A

### Summary of Invention

### Technical Problem

An object of the present invention is to provide a carbon nanotube aggregate excellent in gripping force.

### Solution to Problem

According to one embodiment of the present invention, there is provided a carbon nanotube aggregate of a sheet shape, including a plurality of carbon nanotubes, wherein the carbon nanotube aggregate has a cohesive strength N of 3 nJ or more on a front surface and/or a back surface thereof, which is measured by a nanoindentation method with an indentation load of 500 µN.

In one embodiment, the carbon nanotube aggregate has a hardness of 0.4 MPa or less, which is measured by the nanoindentation method.

According to another embodiment of the present invention, there is provided a carbon nanotube aggregate of a sheet shape, including a plurality of carbon nanotubes, wherein the carbon nanotube aggregate has a cohesive strength T of 100 µJ or more on a front surface and/or a back surface thereof, which is measured by thermomechanical analysis (TMA) with an indentation load of 320 g/cm².

In one embodiment, a non-aligned portion of the carbon nanotubes is present near an end portion in a lengthwise direction of the carbon nanotube aggregate.

### Advantageous Effects of Invention

According to the present invention, the carbon nanotube aggregate excellent in gripping force can be provided by setting the cohesive strength of the carbon nanotube aggregate on one surface, or each of both surfaces, thereof to a specific value.

### Brief Description of Drawings

FIG. **1** is a schematic sectional view of a carbon nanotube aggregate according to one embodiment of the present invention.
FIG. **2** is a graph for showing a load-displacement curve of the carbon nanotube aggregate according to one embodiment of the present invention by a nanoindentation method.
FIG. **3** is a graph for showing a load-displacement curve of the carbon nanotube aggregate according to one embodiment of the present invention by TMA.
FIG. **4** is a schematic sectional view of a carbon nanotube aggregate according to another embodiment of the present invention.
FIG. **5** is a SEM image of the carbon nanotube aggregate according to one embodiment of the present invention.
FIG. **6** is a schematic sectional view of a carbon nanotube aggregate according to another embodiment of the present invention.
FIG. **7** is a schematic sectional view of a production apparatus for a carbon nanotube aggregate in one embodiment of the present invention.

### Description of Embodiments

### A. Carbon Nanotube Aggregate

### A-1. Overall Configuration of Carbon Nanotube Aggregate

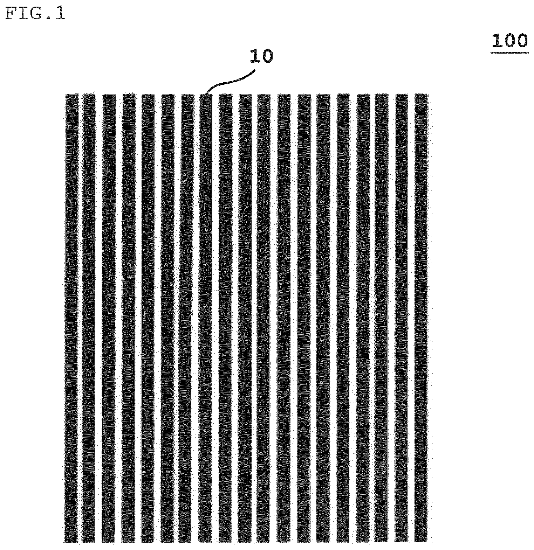

FIG. **1** is a schematic sectional view for schematically illustrating part of a carbon nanotube aggregate according to one embodiment of the present invention. A carbon nanotube aggregate **100** includes a plurality of carbon nanotubes **10,** and is formed into a sheet shape. The carbon nanotubes **10** are aligned in a substantially vertical direction relative to a predetermined plane (e.g., one surface of the carbon nanotube aggregate defined in the end portions of the plurality of carbon nanotubes). The term "substantially vertical direction" as used herein means that an angle relative to the predetermined plane is preferably 90°±20°, more preferably 90°±15°, still more preferably 90°±10°, particularly preferably 90°±5°.

In the present invention, a surface having a high gripping force can be formed by setting a cohesive strength on the front surface and/or back surface of the carbon nanotube aggregate (a surface on the upper side of the drawing sheet and/or a surface on the lower side of the drawing sheet in FIG. **1**) to a specific value, and hence a carbon nanotube aggregate that can strongly hold a mounted object on the surface can be provided. In one embodiment, the cohesive strength is specified by a cohesive strength N measured by a nanoindentation method. In another embodiment, the cohesive strength is specified by a cohesive strength T measured by thermomechanical analysis (TMA).

In one embodiment, the carbon nanotube aggregate has a cohesive strength N on the front surface and/or back surface of the carbon nanotube aggregate (the surface on the upper side of the drawing sheet and/or the surface on the lower side of the drawing sheet in FIG. **1**) measured by a nanoindentation method with an indentation load of 500 µN (hereinafter sometimes simply referred toas "cohesive strength N") of 3 nJormore. In the present invention, a surface having a high gripping force can be formed by increasing the cohesive strength N, and hence a carbon nanotube aggregate that can strongly hold a mounted object on the surface can be provided. The cohesive strength N may be controlled by, for example, adjusting the alignment of the carbon nanotubes, adjusting the lengths of the carbon nanotubes, adjusting the density of the carbon nanotubes, adjusting the wall numbers and/or diameters of the carbon nanotubes, appropriately selecting a carbon source at the time of the formation of the carbon nanotubes, appropriately adjusting a raw material concentration, appropriately adjusting the size of a catalyst, appropriately adjusting the activity of the catalyst, or appropriately adjusting the growth time of the carbon nanotubes.

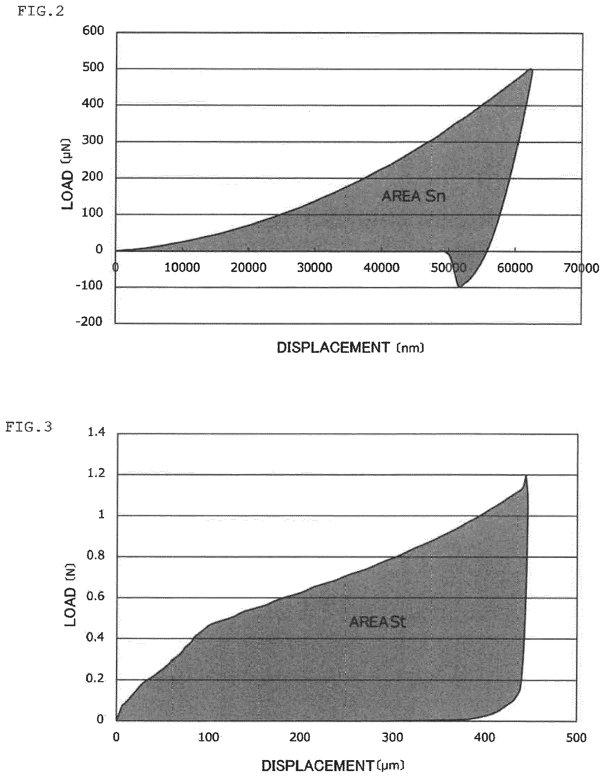

The term "cohesive strength N measured by a nanoindentation method" as used herein means an area Sn defined by a loading curve, an unloading curve, and a displacement axis in a load-displacement curve by the nanoindentation method obtained under the following conditions as shown in FIG. **2****.**

**<Measurement Conditions for Nanoindentation Method>**

| | |
|---|---|
| Measurement temperature: | 25°C |
| Indenter: | Conical indenter, tip curvature radius: 1 µm, apex angle: 90° |
| Measurement method: | Single indentation measurement |
| Indentation load: | 0 µN→500 µN |
| Loading rate: | 5,000 nm/s |
| Unloading rate: | 5,000 nm/s |

The cohesive strength N is preferably 5 nJ or more, more preferably 7 nJ or more, still more preferably from 9 nJ to 200 nJ. When the cohesive strength falls within such range, the effects of the present invention become more significant.

In one embodiment, a hardness on the front surface and/or back surface of the carbon nanotube aggregate measured by the nanoindentation method is preferably 0.4 MPa or less, more preferably 0.2 MPa or less, still more preferably 0.1 MPa or less, particularly preferably 0.05 MPa or less. Measurement conditions for the nanoindentation method are as described above. When the hardness measured by the nanoindentation method falls within the range, a carbon nanotube aggregate in which the cohesive strength N is high can be obtained. The hardness on the surface on which the cohesive strength N falls within the above-mentioned range preferably falls within the range. The "hardness" is calculated from a maximum load Pmax (i.e., a load of 500 µN) and a contact projection area A of an indenter at the time of the indentation of the indenter by the loading of the maximum load Pmax through the use of the expression "(Pmax)/A".

In one embodiment, the carbon nanotube aggregate has a cohesive strength T on the front surface and/or back surface of the carbon nanotube aggregate (the surface on the upper side of the drawing sheet and/or the surface on the lower side of the drawing sheet in FIG. **1**) measured by thermomechanical analysis (TMA) with an indentation load of 320 g/cm² (hereinafter sometimes simply referred to as "cohesive strength T") of 100 µJ or more. In the present invention, a surface having a high gripping force can be formed by increasing the cohesive strength T, and hence a carbon nanotube aggregate that can strongly hold a mounted object on the surface can be provided. The cohesive strength T may be controlled by, for example, adjusting the alignment of the carbon nanotubes, adjusting the lengths of the carbon nanotubes, adjusting the density of the carbon nanotubes, adjusting the wall numbers and/or diameters of the carbon nanotubes, appropriately selecting the carbon source at the time of the formation of the carbon nanotubes, appropriately adjusting the raw material concentration, appropriately adjusting the size of the catalyst, appropriately adjusting the activity of the catalyst, or appropriately adjusting the growth time. In particular, when the alignment of the carbon nanotubes is adjusted, and a non-aligned portion is formed near an end portion in the lengthwise direction of the carbon nanotube aggregate as described later, the cohesive strength T may be set to an appropriate value on the surface of the carbon nanotube aggregate having formed thereon the non-aligned portion.

The term "cohesive strength T measured by thermomechanical analysis (TMA)" as used herein means an area St defined by a loading curve, an unloading curve, and a displacement axis in a load-displacement curve by the nanoindentation method obtained under the following conditions as shown in FIG. **3****.**

**<Measurement Conditions for TMA>**

| | |
|---|---|
| Measurement temperature: | 25°C |
| Probe: | Macro-expansion probe (cylindrical indenter): ϕ7 mm |
| Measurement method: | Indentation measurement |
| Indentation load: | 0 N→1.2 N (320 g/cm²) |
| Loading rate: | 1.2 N/min |
| Unloading rate: | 1.2 N/min |

The cohesive strength T is preferably 150 µJ or more, more preferably 190 µJ or more, still more preferably 250 µJ or more. When the cohesive strength falls within such range, the effects of the present invention become more significant. The upper limit of the cohesive strength T is, for example, 2,000 µJ or less, preferably 1,000 µJ or less, more preferably 800 µJ or less.

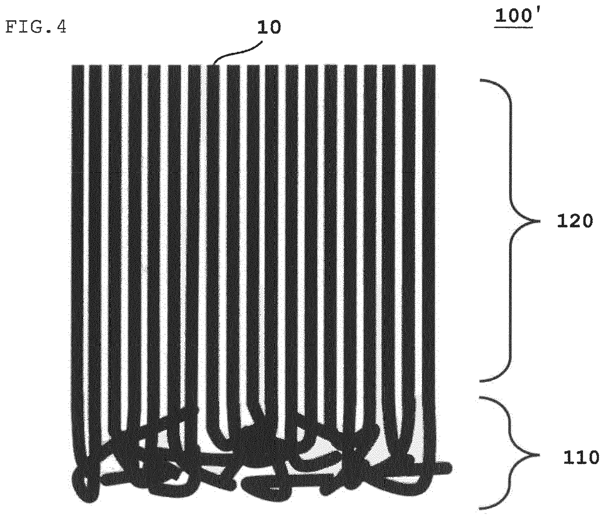

FIG. **4** is a schematic sectional view for schematically illustrating part of a carbon nanotube aggregate according to another embodiment of the present invention. In this embodiment, the carbon nanotube aggregate **100'** have a non-aligned portion **110** of the carbon nanotubes **10.** In one embodiment, as illustrated in FIG. **4****,** the carbon nanotube aggregate **100'** further includes an aligned portion **120** of the carbon nanotubes. The aligned portion **120** of the carbon nanotubes is aligned in a substantially vertical direction relative to a predetermined plane (e.g., one surface of the carbon nanotube aggregate defined in the end portions of the plurality of carbon nanotubes) . In the present invention, the cohesive strength N and the cohesive strength T may be controlled by adjusting, for example, the position or thickness of the non-aligned portion of the carbon nanotubes, or a thickness ratio between the non-aligned portion and the aligned portion.

In one embodiment, the non-aligned portion **110** of the carbon nanotubes **10** is present near an end portion in the lengthwise direction of the carbon nanotube aggregate **100.** In FIG. **4****,** the non-aligned portion **110** is formed at one end of the carbon nanotube aggregate **100.** The position of thenon-alignedportionisnot limited to the example illustrated in FIG. **4****,** and the non-aligned portions of the carbon nanotubes may be present near both end portions in the lengthwise direction of the carbon nanotube aggregate. In addition, the non-aligned portion of the carbon nanotubes may be present near the intermediate portion of the carbon nanotube aggregate. Further, the carbon nanotube aggregate may include a plurality of non-aligned portions or aligned portions of the carbon nanotubes.

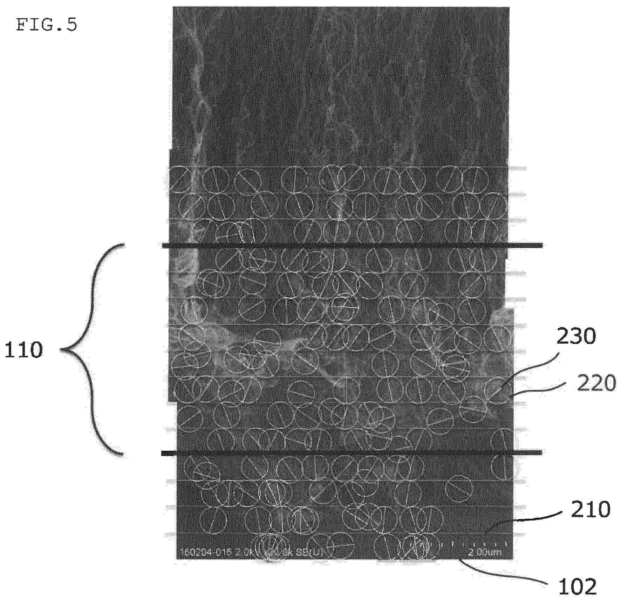

Herein, the non-aligned portion of the carbon nanotubes means an aggregate portion including such carbon nanotubes that the standard deviation value of their alignment angles is 40° or more. The standard deviation value of the alignment angles of the carbon nanotubes is determined as described below.
(1) A SEM image (magnification: 20,000, image range: the thickness of the carbon nanotube aggregatexa width of about 6 µm) of a section of the carbon nanotube aggregate is acquired. FIG. **5** is the SEM image, and a side closer to a lower surface **102** of the carbon nanotube aggregate is shown.
(2) Surfaces which are defined in the end portions of a plurality of carbon nanotubes near both end portions in the thickness direction of the carbon nanotube aggregate and in each of which 10 or more carbon nanotubes are present in the widthwise direction of the aggregate are defined as an upper surface and the lower surface **102.** In one embodiment, the standard deviation value of the alignment angles of the carbon nanotubes may be measured after the formation of the carbon nanotube aggregate on a base material and before the collection of the carbon nanotube aggregate from the base material. At this time, the lower surface of the carbon nanotube aggregate is a surface substantially parallel to the base material.
(3) Lines **210** parallel to the lower surface **102** are drawn from the lower surface **102** every 500 nm to set divisions at intervals of 500 nm. In FIG. **5****,** a state in which up to 15 lines are drawn (state in which 15 divisions are set) is shown.
(4) In one division, 10 carbon nanotubes are selected at random.
(5) For each selected carbon nanotube, a circle **220** including the carbon nanotube is set. At this time, the circle **220** is set so that a straight line **230** connecting the two end portions of the carbon nanotube in contact with the circle may have a length of 500 nm±50 nm in the division.
(6) The alignment angle of the straight line **230** relative to the lower surface **102** is measured, and the standard deviation of the alignment angles is determined from the angles of the 10 carbon nanotubes in the division.
(7) When the standard deviation of the alignment angles is 40° or more, it is judged that the carbon nanotubes in the division are not aligned, and hence the division is the non-aligned portion **110** of the carbon nanotubes. In FIG. **5****,** the thickness of the non-aligned portion **110** is 4 µm. The non-aligned portion of the carbon nanotubes is hereinafter sometimes simply referred to as "non-aligned portion".

Herein, the aligned portion of the carbon nanotubes means an aggregate portion including such carbon nanotubes that the standard deviation value of their alignment angles is less than 40°. That is, the standard deviation of the alignment angles of the carbon nanotubes is determined for each predetermined division as described above, and when the standard deviation is less than 40°, it is judged that the carbon nanotubes in the division are aligned, and hence the division is the aligned portion of the carbon nanotubes. The aligned portion of the carbon nanotubes is hereinafter sometimes simply referred to as "aligned portion".

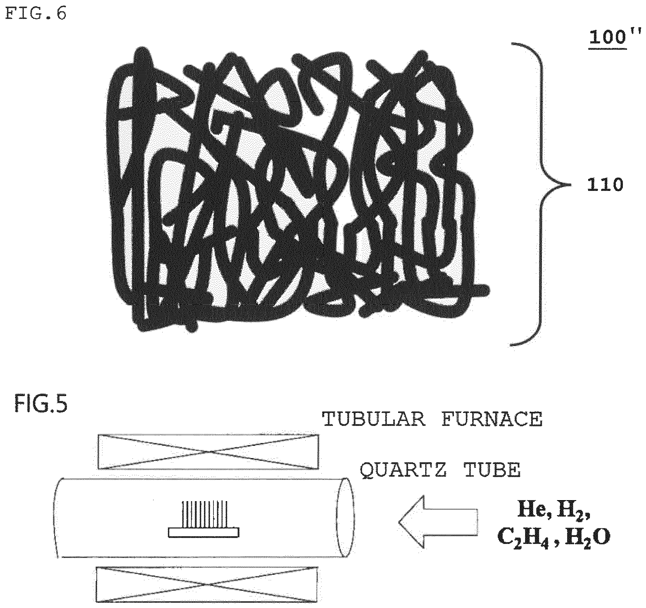

FIG. **6** is a schematic sectional view for schematically illustrating a carbon nanotube aggregate according to another embodiment of the present invention. In the embodiment illustrated in FIG. **6****,** a carbon nanotube aggregate **100"** is free of the aligned portion **120** of the carbon nanotube aggregate **100,** and includes the non-aligned portion **110** of the carbon nanotubes in its entirety.

In the carbon nanotube aggregate including the aligned portion and the non-aligned portion, the thickness of the non-aligned portion is preferably from 0.5 µm to 50 µm, more preferably from 1 µm to 20 µm, still more preferably from 2 µm to 10 µm, particularly preferably from 2 µm to 7 µm. When the thickness falls within such range, a carbon nanotube aggregate in which the cohesive strength N and the cohesive strength T are high, which is excellent in pressure-sensitive adhesive property, and which can maintain a sheet shape can be obtained.

In the carbon nanotube aggregate including the aligned portion and the non-aligned portion, the ratio of the thickness of the non-aligned portion is preferably from 0.001% to 50%, more preferably from 0.01% to 40%, still more preferably from 0.05% to 30%, particularly preferably from 0.1% to 20% with respect to the thickness of the carbon nanotube aggregate (the sum of the thickness of the aligned portion and the thickness of the non-aligned portion). When the ratio falls within such range, a carbon nanotube aggregate in which the cohesive strength N and the cohesive strength T are high, which is excellent in pressure-sensitive adhesive property, and which can maintain a sheet shape can be obtained.

The thickness of the carbon nanotube aggregate is, for example, from 10 µm to 5,000 µm, preferably from 50 µm to 4,000 µm, more preferably from 100 µm to 3,000 µm, still more preferably from 300 µm to 2,000 µm. The thickness of the carbon nanotube aggregate is, for example, the average of thicknesses measured at 3 points sampled at random in a portion inward from an end portion in the surface direction of the carbon nanotube aggregate by 0.2 mm or more.

The maximum coef ficient of static friction of the surface of the carbon nanotube aggregate (surface defined in the end portions of the plurality of carbon nanotubes) against a glass surface at 23°C is preferably 1.0 or more. The upper limit value of the maximum coefficient of static friction is preferably 50. When the maximum coefficient of static friction falls within such range, a carbon nanotube aggregate excellent in gripping property can be obtained. Needless to say, the carbon nanotube aggregate having a large coefficient of friction against the glass surface can express a strong gripping property also against an object to be mounted (e.g., a semiconductor wafer) including a material except glass. A method of measuring the maximum coefficient of static friction is described later.

In one embodiment, the carbon nanotube aggregate of the present invention may be applied to a fixing jig for transportation. The fixing jig for transportation may be suitably used in, for example, a manufacturing process for a semiconductor device or a manufacturing process for an optical member. In more detail, in the manufacturing process for a semiconductor device, the fixing jig for transportation may be used for transporting a material, a production intermediate, a product, or the like (specifically, a semiconductor material, a wafer, a chip, a substrate, a ceramic plate, a film, or the like) from one step to another or in a predetermined step. Alternatively, in the manufacturing process for an optical member, the fixing jig for transportation may be used for transporting a glass base material or the like from one step to another or in a predetermined step.

### A-1-1. Carbon Nanotube Aggregate including Non-aligned Portion near End Portion in its Lengthwise Direction

In one embodiment, as described above, the carbon nanotube aggregate of the present invention includes the non-aligned portion near the end portion in its lengthwise direction. It is preferred that the carbon nanotube aggregate including the non-aligned portion near the end portion in the lengthwise direction further include the aligned portion, that is, the aggregate be of a configuration in which the non-aligned portion is present in an end portion of the aligned portion. The carbon nanotube aggregate including the non-aligned portion near the end portion in the lengthwise direction may include the non-aligned portion only on one of its surfaces, or may include non-aligned portions on both of its surfaces. In addition, the carbon nanotube aggregate including the non-aligned portion near the end portion in the lengthwise direction may include a non-aligned portion positioned in a place except the vicinity of the end portion in addition to the non-aligned portion positioned near the end portion.

The carbon nanotube aggregate including the non-aligned portion near the end portion in the lengthwise direction can use its surface having the non-aligned portion as a pressure-sensitive adhesive surface to strongly hold a mounted object (e.g., a semiconductor material) mounted on the pressure-sensitive adhesive surface. Such effect may be obtained when the non-aligned portion-formed surface has a high cohesive strength T.

In the carbon nanotube aggregate including the non-aligned portion near the end portion in the lengthwise direction, the thickness of the non-aligned portion positioned near the end portion is preferably 0.5 µm or more, more preferably from 0.5 µm to 50 µm, still more preferably from 0.5 µm to 10 µm, still further more preferably from 0.5 µm to 5 µm. When the thickness falls within such range, a carbon nanotube aggregate that can express an excellent gripping force can be obtained. In addition, as the thickness of the non-aligned portion positioned near the end portion becomes larger, the cohesive strength N and the cohesive strength T (in particular, the cohesive strength T) can be increased, and hence a higher gripping force can be obtained.

In the carbon nanotube aggregate including the non-aligned portion near the end portion in the lengthwise direction, the ratio of the thickness of the non-aligned portion positioned near the end portion is preferably from 0.001% to 50%, more preferably from 0.01% to 40%, still more preferably from 0.05% to 30%, particularly preferably from 0.1% to 20% with respect to the thickness of the carbon nanotube aggregate (the sum of the thickness of the aligned portion and the thickness of the non-aligned portion) . When the ratio falls within such range, a carbon nanotube aggregate that can express an excellent gripping force can be obtained.

In the carbon nanotube aggregate including the non-aligned portion near the end portion in the lengthwise direction, the maximum coefficient of static friction of the surface of the carbon nanotube aggregate having formed thereon the non-aligned portion against a glass surface at 23°C is preferably 1.0 or more, more preferably 1.5 or more, still more preferably 3.0 or more, particularly preferably 5.0 or more. In addition, the maximum coefficient of static friction is preferably 100 or less, more preferably 50 or less, still more preferably 30 or less, particularly preferably 20 or less.

The features of the carbon nanotube aggregate except the matter described in the section A-1-1 are as described in the section A-1.

### A-2. Carbon Nanotubes

For the carbon nanotubes forming the carbon nanotube aggregate, for example, the following embodiments (a first embodiment and a second embodiment) may be adopted.

In a first embodiment, the carbon nanotube aggregate includes a plurality of carbon nanotubes, in which the carbon nanotubes each have a plurality of walls, the distribution width of the wall number distribution of the carbon nanotubes is 10 walls or more, and the relative frequency of the mode of the wall number distribution is 25% or less. A carbon nanotube aggregate having such configuration is excellent in pressure-sensitive adhesive strength.

In the first embodiment, the distribution width of the wall number distribution of the carbon nanotubes is preferably 10 walls or more, more preferably from 10 walls to 30 walls, still more preferably from 10 walls to 25 walls, particularly preferably from 10 walls to 20 walls. When the distribution width of the wall number distribution of the carbon nanotubes is adjusted to fall within such range, a carbon nanotube aggregate excellent in pressure-sensitive adhesive strength can be obtained. The "distribution width" of the wall number distribution of the carbon nanotubes refers to a difference between the maximum wall number and minimum wall number of the wall numbers of the carbon nanotubes.

The wall number and wall number distribution of the carbon nanotubes may each be measured with any appropriate device. The wall number and wall number distribution of the carbon nanotubes are each preferably measured with a scanning electron microscope (SEM) or a transmission electron microscope (TEM). For example, at least 10, preferably 20 or more carbon nanotubes may be taken out from the carbon nanotube aggregate to evaluate the wall number and the wall number distribution by the measurement with the SEM or the TEM.

In the first embodiment, the maximum wall number of the wall numbers of the carbon nanotubes is preferably from 5 to 30, more preferably from 10 to 30, still more preferably from 15 to 30, particularly preferably from 15 to 25.

In the first embodiment, the minimum wall number of the wall numbers of the carbon nanotubes is preferably from 1 to 10, more preferably from 1 to 5.

In the first embodiment, the relative frequency of the mode of the wall number distribution of the carbon nanotubes is preferably 25% or less, more preferably from 1% to 25%, still more preferably from 5% to 25%, particularly preferably from 10% to 25%, most preferably from 15% to 25%. When the relative frequency of the mode of the wall number distribution of the carbon nanotubes is adjusted to fall within the range, a carbon nanotube aggregate excellent in pressure-sensitive adhesive strength can be obtained.

In the first embodiment, the mode of the wall number distribution of the carbon nanotubes is present at preferably from 2 walls to 10 walls in number, more preferably from 3 walls to 10 walls in number. When the mode of the wall number distribution of the carbon nanotubes is adjusted to fall within the range, a carbon nanotube aggregate excellent in pressure-sensitive adhesive strength can be obtained.

In the first embodiment, regarding the shape of each of the carbon nanotubes, the lateral section of the carbon nanotube only needs to have any appropriate shape. The lateral section is of, for example, a substantially circular shape, an oval shape, or an n-gonal shape (n represents an integer of 3 or more).

In the first embodiment, the diameter of each of the carbon nanotubes is preferably from 0.3 nm to 2,000 nm, more preferably from 1 nm to 1,000 nm, still more preferably from 2 nm to 500 nm. When the diameter of each of the carbon nanotubes is adjusted to fall within the range, a carbon nanotube aggregate excellent in pressure-sensitive adhesive strength can be obtained.

In the first embodiment, the specific surface area and density of each of the carbon nanotubes may be set to any appropriate values.

In a second embodiment, the carbon nanotube aggregate includes a plurality of carbon nanotubes, in which the carbon nanotubes each have a plurality of walls, the mode of the wall number distribution of the carbon nanotubes is present at 10 walls or less in number, and the relative frequency of the mode is 30% or more. A carbon nanotube aggregate having such configuration is excellent in pressure-sensitive adhesive strength.

In the second embodiment, the distribution width of the wall number distribution of the carbon nanotubes is preferably 9 walls or less, more preferably from 1 wall to 9 walls, still more preferably from 2 walls to 8 walls, particularly preferably from 3 walls to 8 walls. When the distribution width of the wall number distribution of the carbon nanotubes is adjusted to fall within such range, a carbon nanotube aggregate excellent in pressure-sensitive adhesive strength can be obtained.

In the second embodiment, the maximum wall number of the wall numbers of the carbon nanotubes is preferably from 1 to 20, more preferably from 2 to 15, still more preferably from 3 to 10.

In the second embodiment, the minimum wall number of the wall numbers of the carbon nanotubes is preferably from 1 to 10, more preferably from 1 to 5.

In the second embodiment, the relative frequency of the mode of the wall number distribution of the carbon nanotubes is preferably 30% or more, more preferably from 30% to 100%, still more preferably from 30% to 90%, particularly preferably from 30% to 80%, most preferably from 30% to 70%.

In the second embodiment, the mode of the wall number distribution of the carbon nanotubes is present at preferably 10 walls or less in number, more preferably from 1 wall to 10 walls in number, still more preferably from 2 walls to 8 walls in number, particularly preferably from 2 walls to 6 walls in number.

In the second embodiment, regarding the shape of each of the carbon nanotubes, the lateral section of the carbon nanotube only needs to have any appropriate shape. The lateral section is of, for example, a substantially circular shape, an oval shape, or an n-gonal shape (n represents an integer of 3 or more).

In the second embodiment, the diameter of each of the carbon nanotubes is preferably from 0.3 nmto2 , 000nm, more preferably from 1 nm to 1,000 nm, still more preferably from 2 nm to 500 nm. When the diameter of each of the carbon nanotubes is adjusted to fall within the range, a carbon nanotube aggregate excellent in pressure-sensitive adhesive strength can be obtained.

In the second embodiment, the specific surface area and density of the carbon nanotubes may be set to any appropriate values.

### B. Method of producing Carbon Nanotube Aggregate

Any appropriate method may be adopted as a method of producing the carbon nanotube aggregate.

The method of producing the carbon nanotube aggregate is, for example, a method of producing a carbon nanotube aggregate aligned substantially perpendicularly from a base material by chemical vapor deposition (CVD) involving forming a catalyst layer on the base material and supplying a carbon source under a state in which a catalyst is activated with heat, plasma, or the like to grow the carbon nanotubes.

Any appropriate base material may be adopted as the base material that may be used in the method of producing the carbon nanotube aggregate. The base material is, for example, a material having smoothness and high-temperature heat resistance enough to resist the production of the carbon nanotubes. Examples of such material include: metal oxides, such as quartz glass, zirconia, and alumina; metals, such as silicon (e.g., a silicon wafer), aluminum, and copper; carbides, such as silicon carbide; and nitrides, such as silicon nitride, aluminum nitride, and gallium nitride.

Any appropriate apparatus may be adopted as an apparatus for producing the carbon nanotube aggregate. The apparatus is, for example, a thermal CVD apparatus of a hot wall type formed by surrounding a cylindrical reaction vessel with a resistance heating electric tubular furnace as illustrated in FIG. 7. In this case, for example, a heat-resistant quartz tube is preferably used as the reaction vessel.

Any appropriate catalyst may be used as the catalyst (material for the catalyst layer) that may be used in the production of the carbon nanotube aggregate. Examples of the catalyst include metal catalysts, such as iron, cobalt, nickel, gold, platinum, silver, and copper.

When the carbon nanotube aggregate is produced, an intermediate layer may be arranged between the base material and the catalyst layer as required. A material forming the intermediate layer is, for example, a metal or a metal oxide. In one embodiment, the intermediate layer includes an alumina/hydrophilic film.

Any appropriate method may be adopted as a method of producing the alumina/hydrophilic film. For example, the film is obtained by producing a SiO₂ film on the base material, depositing Al from the vapor, and then increasing the temperature of Al to 450°C to oxidize Al. According to such production method, Al₂O₃ interacts with the hydrophilic SiO₂ film, and hence an Al₂O₃ surface different from that obtained by directly depositing Al₂O₃ from the vapor in particle diameter is formed. When Al is deposited from the vapor, and then its temperature is increased to 450°C so that Al may be oxidized without the production of any hydrophilic film on the base material, it may be difficult to form the Al₂O₃ surface having a different particle diameter. In addition, when the hydrophilic film is produced on the base material and Al₂O₃ is directly deposited from the vapor, it may also be difficult to form the Al₂O₃ surface having a different particle diameter.

The thickness of the catalyst layer that may be used in the production of the carbon nanotube aggregate is preferably from 0.01 nm to 20 nm, more preferably from 0.1 nm to 10 nm in order to form fine particles. When the thickness of the catalyst layer that may be used in the production of the carbon nanotube aggregate is adjusted to fall within the range, a carbon nanotube aggregate in which the cohesive strength N and the cohesive strength T are high can be obtained. In addition, a carbon nanotube aggregate including a non-aligned portion can be formed.

The amount of the catalyst layer that may be used in the production of the carbon nanotube aggregate is preferably from 50 ng/cm² to 3,000 ng/cm², more preferably from 100 ng/cm² to 1,500 ng/cm², particularly preferably from 300 ng/cm² to 1,000 ng/cm². When the amount of the catalyst layer that maybe used in the production of the carbon nanotube aggregate is adjusted to fall within the range, a carbon nanotube aggregate in which the cohesive strength N and the cohesive strength T are high can be obtained. In addition, a carbon nanotube aggregate including a non-aligned portion can be formed.

Any appropriate method may be adopted as a method of forming the catalyst layer. Examples of the method include a method involving depositing a metal catalyst from the vapor, for example, with an electron beam (EB) or by sputtering and a method involving applying a suspension of metal catalyst fine particles onto the base material.

The catalyst layer formed by the above-mentioned method may be used in the production of the carbon nanotube aggregate by being turned into fine particles by treatment such as heating treatment. For example, the temperature of the heating treatment is preferably from 400°C to 1,200°C, more preferably from 500°C to 1,100°C, still more preferably from 600°C to 1,000°C, particularly preferably from 700°C to 900°C. For example, the holding time of the heating treatment is preferably from 0 minutes to 180 minutes, more preferably from 5 minutes to 150 minutes, still more preferably from 10 minutes to 120 minutes, particularly preferably from 15 minutes to 90 minutes . In one embodiment, when the heating treatment is performed, the cohesive strength N and cohesive strength T of the carbon nanotube aggregate may be appropriately controlled, and a carbon nanotube aggregate in which a non-aligned portion is appropriately formed may be obtained. For example, with regard to the sizes of catalyst fine particles formed by a method such as the heating treatment as described above, the average particle diameter of their circle-equivalent diameters is preferably from 1 nm to 300 nm, more preferably from 3 nm to 100 nm, still more preferably from 5 nm to 50 nm, particularly preferably from 10 nm to 30 nm. In one embodiment, when the sizes of the catalyst fine particles satisfy the condition, the cohesive strength N and cohesive strength T of the carbon nanotube aggregate may be appropriately controlled, and a carbon nanotube aggregate in which a non-aligned portion is appropriately formed may be obtained.

Any appropriate carbon source may be used as the carbon source that may be used in the production of the carbon nanotube aggregate. Examples thereof include: hydrocarbons, such as methane, ethylene, acetylene, and benzene; and alcohols, such as methanol and ethanol.

In one embodiment, the cohesive strength N and the cohesive strength T may be controlled by the kind of the carbon source to be used. In addition, the formation of the non-aligned portion may be controlled. In one embodiment, the cohesive strength N and cohesive strength T of the carbon nanotube aggregate may be increased by using ethylene as the carbon source. In addition, a carbon nanotube aggregate including a non-aligned portion may be formed.

In one embodiment, the carbon source is supplied as a mixed gas together with helium, hydrogen, and water vapor. In one embodiment, the cohesive strength N and cohesive strength T of the carbon nanotube aggregate may be controlled by the composition of the mixed gas. In addition, a carbon nanotube aggregate including a non-aligned portion may be formed. The non-aligned portion may be formed by, for example, increasing the amount of hydrogen in the mixed gas.

The concentration of the carbon source (preferably ethylene) in the mixed gas at 23°C is preferably from 2 vol% to 30 vol%, more preferably from 2 vol% to 20 vol%. The concentration of helium in the mixed gas at 23°C is preferably from 15 vol% to 92 vol%, more preferably from 30 vol% to 80 vol%. The concentration of hydrogen in the mixed gas at 23°C is preferably from 5 vol% to 90 vol%, more preferably from 20 vol% to 90 vol%. The concentration of water vapor in the mixed gas at 23°C is preferably from 0.02 vol% to 0.3 vol%, more preferably from 0.02 vol% to 0.15 vol%. In one embodiment, when the mixed gas having the foregoing composition is used, the cohesive strength N and cohesive strength T of the carbon nanotube aggregate may be appropriately controlled, and a carbon nanotube aggregate in which a non-aligned portion is appropriately formed may be obtained.

A volume ratio (hydrogen/carbon source) between the carbon source (preferably ethylene) and hydrogen in the mixed gas at 23°C is preferably from 2 to 20, more preferably from 4 to 10. When the ratio falls within such range, the cohesive strength N and the cohesive strength T may be appropriately controlled, and a carbon nanotube aggregate in which a non-aligned portion is appropriately formed may be obtained.

A volume ratio (hydrogen/water vapor) between the water vapor and hydrogen in the mixed gas at 23°C is preferably from 100 to 2,000, more preferably from 200 to 1,500. When the ratio falls within such range, the cohesive strength N and the cohesive strength T may be appropriately controlled, and a carbon nanotube aggregate in which a non-aligned portion is appropriately formed may be obtained.

Any appropriate temperature may be adopted as a production temperature in the production of the carbon nanotube aggregate. For example, the temperature is preferably from 400°C to 1,000°C, more preferably from 500°C to 900°C, still more preferably from 600°C to 800°C, still further more preferably from 700°C to 800°C, particularly preferably from 730°C to 780°C in order that catalyst particles allowing sufficient expression of the effects of the present invention may be formed. The cohesive strength N and the cohesive strength T may be controlled by the production temperature. In addition, the formation of the non-aligned portion may be controlled.

In one embodiment, the following procedure is followed: as described above, the catalyst layer is formed on the base material, and under a state in which the catalyst is activated, the carbon source is supplied to grow the carbon nanotubes; and then, the supply of the carbon source is stopped, and the carbon nanotubes are maintained at a reaction temperature under a state in which the carbon source is present. In one embodiment, the cohesive strength N and the cohesive strength T may be controlled by conditions for the reaction temperature-maintaining step. In addition, a carbon nanotube aggregate including a non-aligned portion may be formed.

In one embodiment, the following procedure may be followed: as described above, the catalyst layer is formed on the base material, and under a state in which the catalyst is activated, the carbon source is supplied to grow the carbon nanotubes; and then, a predetermined load is applied in the thickness direction of each of the carbon nanotubes on the base material to compress the carbon nanotubes. According to such procedure, a carbon nanotube aggregate (FIG. **6**) formed only of the non-aligned portion of the carbon nanotubes may be obtained. The load is, for example, from 1 g/cm² to 10,000 g/cm², preferably from 5 g/cm² to 1,000 g/cm², more preferably from 100 g/cm² to 500 g/cm². In one embodiment, the ratio of the thickness of the carbon nanotube layer (that is, the carbon nanotube aggregate) after the compression to the thickness of the carbon nanotube layer before the compression is from 10% to 90%, preferably from 20% to 80%, more preferably from 30% to 60%.

The carbon nanotube aggregate is formed on the base material as described above, and then the carbon nanotube aggregate is collected from the base material. Thus, the carbon nanotube aggregate of the present invention is obtained. In the present invention, when the non-aligned portion is formed, the carbon nanotube aggregate can be collected while being in a sheet shape formed on the base material.

### Examples

The present invention is described below on the basis of Examples, but the present invention is not limited thereto. Various evaluations and measurements were performed by the following methods. The thickness of a carbon nanotube aggregate and the thickness of the non-aligned portion of the aggregate were each measured by observing a section of the carbon nanotube aggregate with a SEM.

### (1) Cohesive Strength N of Carbon Nanotube Aggregate (Nanoindentation Method)

The load-displacement curve of a predetermined surface of a carbon nanotube aggregate was obtained by a nanoindentation method under the following conditions, and an area Sn defined by a loading curve, an unloading curve, and a displacement axis was measured. The area Sn was defined as the cohesive strength N of the carbon nanotube aggregate.

**<Measurement Conditions for Nanoindentation Method>**

| | |
|---|---|
| Measurement temperature: | 25°C |
| Indenter: | Conical indenter, tip curvature radius: 1 µm, apex angle: 90° |
| Measurement method: | Single indentation measurement |
| Indentation load: | 0 µN→500 µN |
| Loading rate: | 5,000 nm/s |
| Unloading rate: | 5,000 nm/s |

### (2) Hardness of Carbon Nanotube Aggregate

The load-displacement curve of a carbon nanotube aggregate was obtained under the same conditions as those of the section (1), and a value obtained through calculation from a maximum load Pmax (i.e., a load of 500 µN) and a contact projection area A of an indenter at the time of the indentation of the indenter by the loading of the maximum load Pmax through the use of the expression " (Pmax) /A" was defined as the hardness of the carbon nanotube aggregate.

### (3) Transportation Evaluation

A semiconductor wafer made of silicon was fixed onto a stage reciprocating in a linear direction, and an evaluation sample produced in each of Examples and Comparative Example was mounted on the semiconductor wafer made of silicon. At this time, the pressure-sensitive adhesive surface of the evaluation sample was brought into contact with the semiconductor wafer.

Next, a load of 40 g was mounted on the evaluation sample, and the stage was reciprocated 100 times at an acceleration of 1 G. The shift amount of the evaluation sample after the reciprocations was measured. In Table 1, a case in which an average shift amount per reciprocation was less than 0.2 mm (or the shift amount after the 100 reciprocations was less than 2 cm) was defined as a success

(○), and a case in which the average shift amount was 0.2 mm or more was defined as a failure (×).

### (4) Cohesive Strength T of Carbon Nanotube Aggregate (TMA)

The load-displacement curve of a predetermined surface of a carbon nanotube aggregate was obtained by thermomechanical analysis (TMA) under the following conditions, and an area St defined by a loading curve, an unloading curve, and a displacement axis was measured. The area St was defined as the cohesive strength T of the carbon nanotube aggregate.

**<Measurement Conditions for TMA>**

| | |
|---|---|
| Measurement temperature: | 25°C |
| Probe: | Macro-expansion probe (cylindrical indenter): ϕ7 mm |
| Measurement method: | Indentation measurement |
| Indentation load: | 0 N→1.2 N (320 g/cm²) |
| Loading rate: | 1.2 N/min |
| Unloading rate: | 1.2 N/min |

### (5) Maximum Coefficient of Static Friction against Glass Surface

A frictional force was measured by the following method, and a value obtained by dividing the frictional force by a load was defined as a maximum coefficient of static friction.

### (Method of measuring Frictional Force)

An evaluation sample was produced by fixing a surface on an opposite side to the frictional force measurement surface of a carbon nanotube aggregate (size: 9 mm×9 mm) onto a slide glass via a pressure-sensitive adhesive tape (polyimide pressure-sensitive adhesive tape).

Next, the evaluation sample was arranged on another slide glass (size: 26 mmx76 mm) while the frictional force measurement surface in the evaluation sample was directed downward. A weight was mounted on the evaluation sample, and its mass was set so that a load of 55 g was applied to the carbon nanotube aggregate.

Next, under an environment at 23°C, the evaluation sample was pulled in a horizontal direction (tensile rate: 100 mm/min) while the weight was mounted thereon. The maximum load when the evaluation sample started to move was defined as its frictional force. A suspension weigher (manufactured by CUSTOM Corporation, product name: "393-25") was used in the measurement of the frictional force. When the suspension weigher indicated a value of 0.05 kg or more, the numerical value was adopted as the frictional force. When the value indicated by the suspension weigher was less than 0.05 kg, the frictional force was evaluated to be 0 kg.

### [Example 1]

An Al₂O₃ thin film (ultimate vacuum: 8.0×10⁻⁴ Pa, sputtering gas: Ar, gas pressure: 0.50 Pa) was formed in an amount of 3,922 ng/cm² on a silicon base material (manufactured by Valqua FFT Inc. , thickness: 700 µm) with a sputtering apparatus (manufactured by Shibaura Mechatronics Corporation, product name: "CFS-4ES"). An Fe thin film was further formed as a catalyst layer (sputtering gas: Ar, gas pressure: 0.75 Pa) in an amount of 294 ng/cm² on the Al₂O₃ thin film with a sputtering apparatus (manufactured by Shibaura Mechatronics Corporation, product name: "CFS-4ES").

After that, the base material was placed in a quartz tube of 30 mmϕ, and a helium/hydrogen (105/80 sccm) mixed gas having its moisture content kept at 700 ppm was flowed into the quartz tube for 30 minutes to replace the inside of the tube. After that, the temperature in the tube was increased with an electric tubular furnace to 765°C and stabilized at 765°C. While the temperature was kept at 765°C, the inside of the tube was filled with a helium/hydrogen/ethylene (105/80/15 sccm, moisture content: 700 ppm) mixed gas, and the resultant was left to stand for 60 minutes to grow carbon nanotubes on the base material.

After that, the raw material gas was stopped, and the inside of the quartz tube was cooled while a helium/hydrogen (105/80 sccm) mixed gas having its moisture content kept at 700 ppm was flowed into the quartz tube.

A carbon nanotube aggregate having a thickness of 1,100 µm was obtained by the foregoing operation. The portion of the carbon nanotube aggregate upward from the silicon base material by 1 µm was a non-aligned portion having a thickness of 4 µm (standard deviations of alignment degrees: 40° to 67°, average of the standard deviations (the sum of the standard deviations of the respective divisions/the number of the divisions (8)): 48°). The carbon nanotube aggregate was able to be peeled in a sheet shape from the silicon base material with a pair of tweezers.

The carbon nanotube aggregate of a sheet shape produced on the silicon base material was defined as an evaluation sample (1A). An exposed carbon nanotube aggregate surface in the evaluation sample (1A) (i.e., a surface that had been on an opposite side to the silicon base material at the time of the production of the carbon nanotube aggregate) was subjected to the measurements described in the sections (1) and (2). The results are shown in Table 1.

In addition, the carbon nanotube aggregate of a sheet shape was peeled from the silicon base material, and a surface that had been on a silicon base material side at the time of the production of the carbon nanotube aggregate was fixed to an alumina base material via a pressure-sensitive adhesive (base material: polyimide) . Thus, an evaluation sample (1B) was produced.

The evaluation described in the section (3) was performed by using an exposed carbon nanotube aggregate surface in the evaluation sample (1B) (i.e., the surface that had been on the opposite side to the silicon base material at the time of the production of the carbon nanotube aggregate) as apressure-sensitive adhesive surface. The result is shown in Table 1.

### [Example 2]

A carbon nanotube aggregate was produced in the same manner as in Example 1.

The carbon nanotube aggregate of a sheet shape was peeled from the silicon base material, and the surface that had been on the opposite side to the silicon base material at the time of the production of the carbon nanotube aggregate was arranged as it was on the silicon base material. Thus, an evaluation sample (2A) was produced. An exposed carbon nanotube aggregate surface in the evaluation sample (2A) (i.e., the surface that had been on the silicon base material side at the time of the production of the carbon nanotube aggregate) was subjected to the measurements described in the sections (1) and (2). The results are shown in Table 1.

In addition, the carbon nanotube aggregate of a sheet shape was peeled from the silicon base material, and a surface that had been on the opposite side to the silicon base material at the time of the production of the carbon nanotube aggregate was fixed to an alumina base material via a pressure-sensitive adhesive (base material: polyimide) . Thus, an evaluation sample (2B) was produced.

The evaluation described in the section (3) was performed by using an exposed carbon nanotube aggregate surface in the evaluation sample (2B) (i.e., the surface that had been on the silicon base material side at the time of the production of the carbon nanotube aggregate) as a pressure-sensitive adhesive surface. The result is shown in Table 1.

### [Comparative Example 1]

An Al₂O₃ thin film (ultimate vacuum: 8.0×10⁻⁴ Pa, sputtering gas: Ar, gas pressure: 0.50 Pa) was formed in an amount of 3,922 ng/cm² on a silicon base material (manufactured by Valqua FFT Inc., thickness: 700 µm) with a sputtering apparatus (manufactured by Shibaura Mechatronics Corporation, product name: "CFS-4ES"). An Fe thin film was further formed as a catalyst layer (sputtering gas: Ar, gas pressure: 0.75 Pa) in an amount of 294 ng/cm² on the Al₂O₃ thin film with a sputtering apparatus (manufactured by Shibaura Mechatronics Corporation, product name: "CFS-4ES").

After that, the base material was placed in a quartz tube of 30 mmϕ, and a helium/hydrogen (85/60 sccm) mixed gas having its moisture content kept at 600 ppm was flowed into the quartz tube for 30 minutes to replace the inside of the tube. After that, the temperature in the tube was increased with an electric tubular furnace to 765°C and stabilized at 765°C. While the temperature was kept at 765°C, the inside of the tube was filled with a helium/hydrogen/acetylene (85/60/5 sccm, moisture content: 600 ppm) mixed gas, and the resultant was left to stand for 60 minutes to grow carbon nanotubes on the base material.

After that, the raw material gas was stopped, and the inside of the quartz tube was cooled while a helium/hydrogen (85/60 sccm) mixed gas having its moisture content kept at 600 ppm was flowed into the quartz tube.

A carbon nanotube aggregate having a thickness of 270 µm was obtained by the foregoing operation. The carbon nanotube aggregate was free of any non-aligned portion. The carbon nanotube aggregate could not be peeled in a sheet shape.

The resultant carbon nanotube aggregate was transferred from the silicon base material onto a pressure-sensitive adhesive tape (base material: polyimide). Thus, an evaluation sample was produced.

An exposed carbon nanotube aggregate surface in the evaluation sample (i.e., a surface that had been on a silicon base material side at the time of the production of the carbon nanotube aggregate) was subjected to the measurements described in the sections (1) and (2). In addition, the evaluation described in the section (3) was performed by using the surface as a pressure-sensitive adhesive surface. The results are shown in Table 1.

### [Reference Example 1]

A fluorine-based resin was arranged as it was, and the surface of the fluorine-based resin was subjected to the evaluations described in the sections (1) and (2). The results are shown in Table 1.

In addition, an evaluation sample was produced by fixing the fluorine-based resin to a pressure-sensitive adhesive tape (base material: polyimide) . The evaluation described in the section (3) was performed by using the surface of the fluorine-based resin as a pressure-sensitive adhesive surface. The result is shown in Table 1.

### [Reference Example 2]

An evaluation sample was produced by fixing alumina to a pressure-sensitive adhesive tape (base material: polyimide) . The surface of the alumina was subjected to the measurements described in the sections (1) and (2), and the evaluation described in the section (3) was performed by using the surface as apressure-sensitive adhesive surface. The results are shown in Table 1.

**Table 1**

| | Example 1 | Example 2 | Comparative Example 1 | Reference Example 1 | Reference Example 2 |
|---|---|---|---|---|---|
| Cohesive strength (nJ) | 9.8 | 12 | 2.5 | 0.497 | 0 |
| Hardness (MPa) | 0.029 | 0.022 | 0.42 | 3.16 | 8,166 |
| Transportation evaluation | ○ | ○ | × | × | × |

### [Example 3]

An Al₂O₃ thin film (ultimate vacuum: 8.0×10⁻⁴ Pa, sputtering gas: Ar, gas pressure: 0.50 Pa) was formed in an amount of 3,922 ng/cm² on a silicon base material (manufactured by Valqua FFT Inc., thickness: 700 µm) with a sputtering apparatus (manufactured by Shibaura Mechatronics Corporation, product name: "CFS-4ES"). An Fe thin film was further formed as a catalyst layer (sputtering gas: Ar, gas pressure: 0.75 Pa) in an amount of 1,360 ng/cm² on the Al₂O₃ thin film with a sputtering apparatus (manufactured by Shibaura Mechatronics Corporation, product name: "CFS-4ES").

After that, the base material was placed in a quartz tube of 30 mmϕ, and a helium/hydrogen (105/80 sccm) mixed gas having its moisture content kept at 750 ppm was flowed into the quartz tube for 30 minutes to replace the inside of the tube. After that, the temperature in the tube was increased with an electric tubular furnace to 765°C and stabilized at 765°C. While the temperature was kept at 765°C, the inside of the tube was filled with a helium/hydrogen/ethylene (105/80/15 sccm, moisture content: 750 ppm) mixed gas, and the resultant was left to stand for 60 minutes to grow carbon nanotubes on the base material.

After that, the raw material gas was stopped, and the inside of the quartz tube was cooled while a helium/hydrogen (105/80 sccm) mixed gas having its moisture content kept at 750 ppm was flowed into the quartz tube.

A carbon nanotube aggregate having a thickness of 700 µm was obtained by the foregoing operation. The carbon nanotube aggregate included a non-aligned portion in its end portion on the silicon base material side.

The resultant carbon nanotube aggregate was subjected to the evaluations described in the sections (4) and (5). The results are shown in Table 2.

### [Example 4]

A carbon nanotube aggregate was obtained in the same manner as in Example 3 except that: the amount of the Fe thin film serving as the catalyst layer was changed from 1,360 ng/cm² to 540 ng/cm²; and the moisture content of each of the helium/hydrogen (105/80 sccm) mixed gas and the helium/hydrogen/ethylene (105/80/15 sccm) mixed gas was changed from 750 ppm to 250 ppm. The thickness of the resultant carbon nanotube aggregate was 600 µm. The carbon nanotube aggregate included a non-aligned portion in its end portion on the silicon base material side.

### [Example 5]

A carbon nanotube aggregate was obtained in the same manner as in Example 3 except that: the amount of the Fe thin film serving as the catalyst layer was changed from 1,360 ng/cm² to 540 ng/cm²; and the moisture content of each of the helium/hydrogen (105/80 sccm) mixed gas and the helium/hydrogen/ethylene (105/80/15 sccm) mixed gas was changed from 750 ppm to 300 ppm. The thickness of the resultant carbon nanotube aggregate was 1,000 µm. The carbon nanotube aggregate included a non-aligned portion in its end portion on the silicon base material side.

### [Example 6]

A carbon nanotube aggregate was obtained in the same manner as in Example 3 except that: the amount of the Fe thin film serving as the catalyst layer was changed from 1,360 ng/cm² to 540 ng/cm²; a helium/hydrogen (105/100 sccm) mixed gas was used instead of the helium/hydrogen (105/80 sccm) mixed gas; and a helium/hydrogen/ethylene (105/100/15 sccm) mixed gas was used instead of the helium/hydrogen/ethylene (105/80/15 sccm) mixed gas. The thickness of the resultant carbon nanotube aggregate was 1,000 µm. The carbon nanotube aggregate included a non-aligned portion in its end portion on the silicon base material side.

### [Comparative Example 2]

A carbon nanotube aggregate was obtained in the same manner as in Comparative Example 1 except that: the temperature in the quartz tube was increased to 600°C instead of 765°C; and the inside of the tube was filled with a helium/hydrogen/acetylene (85/60/5 sccm, moisture content: 60 ppm) mixed gas while the temperature was kept at 600°C. The resultant carbon nanotube aggregate had a thickness of 270 µm. The carbon nanotube aggregate was free of any non-aligned portion.

**Table 2**

| | Sputtering condition | CVD condition | | | | | Thickness of non-aligned portion (µm) | Cohesive strength T (µJ) | Maximum coefficient of static friction |
|---|---|---|---|---|---|---|---|---|---|
| | Fe amount (ng/cm²) | Reaction temperature (°C) | Moisture amount (ppm) | H₂ flow rate (sccm) | C₂H₄ flow rate (sccm) | C₂H₂ flow rate (sccm) | | | |
| Example 3 | 1,360 | 765 | 750 | 80 | 15 | - | 0.5 | 282 | 2.5 |
| Example 4 | 540 | 765 | 250 | 80 | 15 | - | 1.5 | 416 | 4.2 |
| Example 5 | 540 | 765 | 300 | 80 | 15 | - | 4 | 527 | 7.8 |
| Example 6 | 540 | 765 | 750 | 100 | 15 | - | 0.5 | 191 | 1.3 |
| Comparative Example 2 | 294 | 600 | 60 | 60 | - | 5 | 0 | 95 | 0 |

As is apparent from Table 2, a carbon nanotube aggregate having a cohesive strength T of 100 µJ or more has a high maximum coefficient of static friction. Such carbon nanotube aggregate can express a high gripping force. In addition, the cohesive strength T can be increased by forming a non-aligned portion in an end portion in the lengthwise direction of the carbon nanotube aggregate.

### Reference Signs List

- **10**: carbon nanotube
- **110**: non-aligned portion
- **120**: aligned portion
- **100, 100'**: carbon nanotube aggregate

## Claims

1. A carbon nanotube aggregate of a sheet shape, comprising a plurality of carbon nanotubes, wherein the carbon nanotube aggregate has a cohesive strength N of 3 nJ or more on a front surface and/or a back surface thereof, which is measured by a nanoindentation method with an indentation load of 500 µN.

2. The carbon nanotube aggregate according to claim 1, wherein the carbon nanotube aggregate has a hardness of 0.4 MPa or less on the front surf ace and/or the back surface thereof , which is measured by the nanoindentation method.

3. A carbon nanotube aggregate of a sheet shape, comprising a plurality of carbon nanotubes, wherein the carbon nanotube aggregate has a cohesive strength T of 100 µJ or more on a front surface and/or a back surface thereof, which is measured by thermomechanical analysis (TMA) with an indentation load of 320 g/cm².

4. The carbon nanotube aggregate according to any one of claims 1 to 3, wherein a non-aligned portion of the carbon nanotubes is present near an end portion in a lengthwise direction of the carbon nanotube aggregate.
